# EUROPEAN PATENT SPECIFICATION

(11) **EP 2 753 035 B1**
(45) Date of publication and mention of the grant of the patent: **02.11.2016**
(21) Application number: 12840031.4
(22) Date of filing: 12.12.2012
(51) Int. Cl.: H04L 5/00

(54) **TRANSMISSION RATE CONTROL METHOD FOR INTER-BASE STATION CARRIER AGGREGATION AND BASE STATION**
ÜBERTRAGUNGSRATENSTEUERVERFAHREN FÜR INTER-BASISSTATIONSTRÄGER AGGREGATION UND BASISSTATION
PROCÉDÉ DE RÉGULATION DE LA VITESSE DE TRANSMISSION POUR AGRÉGATION DE PORTEUSES INTER-STATION DE BASE

(43) Date of publication of application: 09.07.2014
(73) Proprietor: Huawei Technologies Co., Ltd., Longgang District Shenzhen, Guangdong 518129 (CN)
(72) Inventor: HUANG, Qufang, Shenzhen Guangdong 518129 (CN); ZENG, Qinghai, Shenzhen Guangdong 518129 (CN)
(74) Representative: Isarpatent
(86) International application number: PCT/CN2012/086430
(87) International publication number: WO 2013/053339

(56) References cited:
- WO-A1-2011/093096
- WO-A1-2011/126024
- WO-A1-2012/062170
- WO-A1-2012/097706
- WO-A1-2013/104416
- WO-A1-2014/069918
- WO-A2-2012/139016
- CN-A- 101 325 805
- CN-A- 101 616 483
- CN-A- 101 998 520
- US-A1- 2009 238 207
- US-A1- 2009 262 707
- US-A1- 2011 002 306
- US-A1- 2011 116 478
- US-A1- 2011 170 506
- "3rd Generation Partnership Project; Technical Specification Group Services and System Aspects; General Packet Radio Service (GPRS) enhancements for Evolved Universal Terrestrial Radio Access Network (E-UTRAN) access (Release 11)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.3.0, 11 September 2012 (2012-09-11), pages 1-283, XP050649057, [retrieved on 2012-09-11]

## Description

### TECHNICAL FIELD

The present invention relates to the field of wireless communications, and in particular, to an inter-base station transmission rate control method, a mobility management entity, and a communications system in the field of wireless communications.

### BACKGROUND

With the development of mobile communications systems, the systems can provide increasingly higher transmission rates and quality of service, and user services also have an increasingly higher requirement on transmission rates. To ensure the rates for common users and provide higher throughput for a part of users in a case that bandwidth configurations are not greatly increased, the Third Generation Partnership Project (Third Generation Partnership Project, 3GPP for short) introduces a carrier aggregation technology. The carrier aggregation means that a user equipment (User Equipment, UE for short) may perform uplink and downlink communication by simultaneously using multiple component carriers (Component Carrier, CC for short), so as to support high-speed data transmission. When the rate for a user is decreased, some component carriers may be released and only one camping carrier may be retained, and released transmission resources may be used by another user, so as to achieve an objective of flexibility and being dynamic.

According to locations of base stations where aggregated carriers are located, the carrier aggregation of a long term evolution (Long Term Evolution, LTE for short) system may be roughly classified into intra-base station cell aggregation, inter-base station cell aggregation, and the like. The intra-base station cell aggregation indicates that component carriers simultaneously used by a UE are controlled by a same base station; the inter-base station cell aggregation indicates that component carriers simultaneously used by a UE are controlled by different base stations, and according to types of base stations where the aggregated carriers are located, the cell aggregation may be further classified into inter-macro base station cell aggregation and cell aggregation between a macro base station and a home base station (home eNB, HeNB for short).

Inter-macro base station cell aggregation may increase data throughput of a user in an edge area of a base station and improve user experience. The cell aggregation between a macro base station and an HeNB can not only increase data throughput of a user, but also offload the system load of a macro network, and can decrease the occurrence of handovers compared with a pure HeNB network.

In the carrier aggregation, a primary cell (Primary Cell, P-Cell for short) is responsible for the work of security, handover, and the like; another cell participating in the aggregation is called a secondary cell (Secondary Cell, S-Cell for short), and the secondary cell is responsible for the work of data transmission and is not involved in security, handover, and the like. A base station where the P-cell is located may be called a first base station, and a base station where the S-Cell is located may be called a second base station.

Bearers in LTE are classified into two types: guaranteed bit rate (Guaranteed Bit Rate, GBR for short) and non-guaranteed bit rate (non-GBR). For a bearer of the GBR type , the network guarantees to provide a predetermined data transmission rate; and for a bearer of the non-GBR type, the network does not guarantee to provide a determined data transmission rate, where when the load of the network is light, the network may provide a higher data transmission rate for the bearer, and when the load of the network is heavy, the network may provide a lower data transmission rate for the bearer.

For the intra-base station carrier aggregation, an S-Cell and a P-Cell used by a UE are located at a same base station, and bearers used by the UE are managed by the same base station, where the bearers include GBR and non-GBR bearers. The base station may control the data transmission rate between the non-GBR bearers used by the UE.

For the inter-base station carrier aggregation, an S-Cell and a P-Cell used by a UE are located at multiple base stations, and non-GBR bearers used by the UE are jointly controlled by the multiple base stations.

Therefore, currently, an effective mechanism is required for the inter-base station carrier aggregation, so as to implement transmission rate control between each base station and a UE.

US 2011/002306 A1 discloses that an MME transmits the handover required message to the target base station, and AMBR information for the UE in the handover required message.

WO 2013/104416 A1 directs to establish a configuration preparation message for the secondary network control node for preparing a carrier aggregation in which data to a user equipment is transmitted by at least two component carriers.

US 2011/116478 A1 provides a method for obtaining bearer condition during a handover of UE.

### SUMMARY

An objective of embodiments of the present invention is to provide a transmission rate control method, a mobility management entity, and a communications system, so as to coordinate a user equipment aggregation maximum bit rate (UE Aggregation Maximum Bit Rate, UE-AMBR for short) of each base station and control a transmission rate between each base station and a UE for inter-base station carrier aggregation.

According to an embodiment of the present invention, a transmission rate control method is provided and includes:
receiving, by a first base station, a user equipment aggregation maximum bit rate UE-AMBR sent by a mobility management entity MME;
determining, by the first base station according to the UE-AMBR sent by the MME, a first UE-AMBR used for the first base station and a second UE-AMBR used for a second base station, where the first base station controls, based on the first UE-AMBR, a transmission rate between the first base station and a user equipment UE; and
sending, by the first base station, the second UE-AMBR to the second base station, so that the second base station controls, based on the second UE-AMBR, a transmission rate between the second base station and the UE;
receiving, by the first base station, a UE-AMBR update request used for the second base station and sent by the second base station, wherein the UE-AMBR update request comprises a second UE-AMBR determined by the second base station;
updating, by the first base station, the second UE-AMBR used for the second base station and determined by the first base station into a new second UE-AMBR according to the second UE-AMBR used for the second base station, determined by the second base station and carried in the update request; and
sending the second UE-AMBR to the second base station, so that the second base station controls, based on the new second UE-AMBR, the transmission rate between the second base station and the UE.

According to an embodiment of the present invention, a transmission rate control method is provided and includes:
receiving, by a mobility management entity MME, a first user equipment aggregation maximum bit rate UE-AMBR used for a first base station and a second UE-AMBR used for a second base station which are sent by the first base station;
updating, by the MME, the first UE-AMBR and the second UE-AMBR; and sending, by the MME, the updated first UE-AMBR to the first base station, and sending the updated second UE-AMBR to the second base station, so that the first base station controls, based on the updated first UE-AMBR, a transmission rate between the first base station and a user equipment UE, and the second base station controls, based on the updated second UE-AMBR, a transmission rate between the second base station and the UE,
where the first base station serves a primary cell, and the second base station serves a secondary cell.

According to an embodiment of the present invention, a base station is provided and includes:
a receiving unit, configured to receive a user equipment aggregation maximum bit rate UE-AMBR sent by a mobility management entity MME;
an allocation unit, configured to determine, according to the UE-AMBR sent by the MME, a first UE-AMBR used for the base station and a second UE-AMBR used for a second base station, where the base station controls, based on the first UE-AMBR, a transmission rate between the base station and a user equipment UE; and
a notification unit, configured to send the second UE-AMBR determined by the allocation unit to the second base station, so that the second base station controls, based on the second UE-AMBR, a transmission rate between the second base station and the UE;
the receiving unit is further configured to receive a UE-AMBR update request used for the second base station and sent by the second base station, wherein the UE-AMBR update request comprises a second UE-AMBR determined by the second base station;
the allocation unit is further configured to update the second UE-AMBR used for the second base station and determined by the first base station into a new second UE-AMBR according to the second UE-AMBR used for the second base station, determined by the second base station and carried in the update request; and
the notification unit is further configured to send the new second UE-AMBR to the second base station, so that the second base station controls, based on the new second UE-AMBR, the transmission rate between the second base station and the UE.

According to an embodiment of the present invention, a mobility management entity is provided and includes:
a receiving unit, configured to receive a first user equipment aggregation maximum bit rate UE-AMBR used for a first base station and a second UE-AMBR used for a second base station which are sent by the first base station;
a configuration unit, configured to update the first UE-AMBR and the second UE-AMBR received by the receiving unit; and
a sending unit, configured to send the first UE-AMBR updated by the configuration unit to the first base station, and send the second UE-AMBR updated by the configuration unit to the second base station, so that the first base station controls, based on the updated first UE-AMBR, a transmission rate between the first base station and a user equipment UE, and the second base station controls, based on the updated second UE-AMBR, a transmission rate between the second base station and the UE,
where the first base station serves a primary cell, and the second base station serves a secondary cell.

According to an embodiment of the present invention, a communications system is provided and includes a first base station, a second base station, and a mobility management entity MME, where:
the first base station receives a user equipment aggregation maximum bit rate UE-AMBR sent by the MME;
the first base station determines, according to the UE-AMBR, a first UE-AMBR used for the first base station and a second UE-AMBR used for the second base station, where the first base station controls, based on the first UE-AMBR, a transmission rate between the first base station and a user equipment UE;
the first base station sends the second UE-AMBR to the second base station; and the second base station controls, based on the second UE-AMBR, a transmission rate between the second base station and the UE.

According to the embodiments of the present invention, for inter-base station carrier aggregation, a first base station or an MME determines a first UE-AMBR used for the first base station and a second UE-AMBR used for a second base station. When multiple base stations separately control UE-AMBRs for a UE, the UE-AMBRs of the first base station and the second base station are effectively coordinated, so that the first base station controls, based on the first UE-AMBR, a transmission rate between the first base station and the user equipment UE and the second base station controls, based on the second UE-AMBR, a transmission rate between the second base station and the UE, thereby improving utilization of the UE-AMBR and ensuring stability of the transmission rate between each base station and the UE.

### BRIEF DESCRIPTION OF DRAWINGS

To describe the technical solutions in the embodiments of the present invention more clearly, the following briefly introduces accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a transmission rate control method according to an embodiment of the present invention;
FIG. 2 is a flowchart of a transmission rate control method according to a further embodiment of the present invention;
FIG. 3 is a flowchart of a transmission rate control method according to a further embodiment of the present invention;
FIG. 4 is a flowchart of a transmission rate control method according to a further embodiment of the present invention;
FIG. 5 is a flowchart of a transmission rate control method according to a further embodiment of the present invention;
FIG. 6 is a flowchart of a transmission rate control method according to another embodiment of the present invention;
FIG. 7 is a flowchart of a transmission rate control method according to a further embodiment of the present invention;
FIG. 8 is a flowchart of a transmission rate control method according to a further embodiment of the present invention;
FIG. 9 is a flowchart of a transmission rate control method according to a further embodiment of the present invention;
FIG. 10 is a flowchart of a transmission rate control method according to a further embodiment of the present invention;
FIG. 11 is a schematic structural diagram of a base station according to an embodiment of the present invention;
FIG. 12 is a schematic structural diagram of a base station according to a further embodiment of the present invention;
FIG. 13 is a schematic structural diagram of a mobility management entity according to an embodiment of the present invention; and
FIG. 14 is a schematic structural diagram of a communications system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

Technical solutions of the present invention may be applied to a variety of communications systems, such as GSM, a code division multiple access (CDMA, Code Division Multiple Access) system, wideband code division multiple access (WCDMA, Wideband Code Division Multiple Access), general packet radio service (GPRS, General Packet Radio Service), and long term evolution (LTE, Long Term Evolution).

A user equipment (UE, User Equipment) may also be called a mobile terminal (Mobile Terminal), a mobile user equipment, or the like, and may communicate with one or more core networks through a radio access network (for example, RAN, Radio Access Network). The user equipment may be a mobile terminal, for example, a mobile phone (or called a "cellular" phone), or a computer with a mobile terminal, and for example, may be a portable, pocket-sized, handheld, computer built-in or vehicle-mounted mobile apparatus, which exchanges voice and/or data with the radio access network.

A base station may be a base station (BTS, Base Transceiver Station) in GSM or CDMA, may also be a base station (NodeB) in WCDMA, and may also be an evolved base station (eNB or e-NodeB, evolutional Node B) in LTE, which is not limited in the present invention; however, for ease of description, an eNB is used as an example for description in the following embodiment.

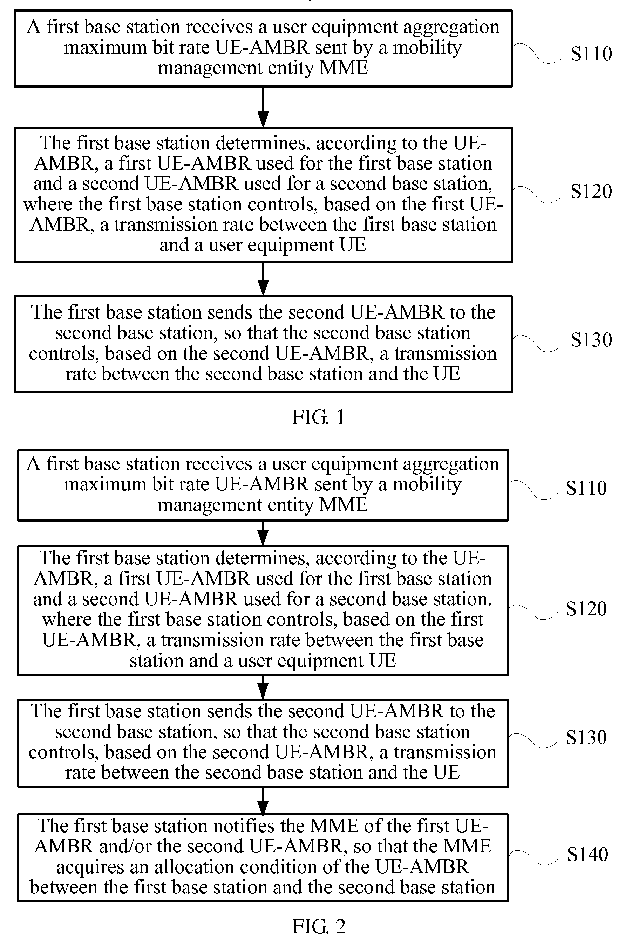

To control data traffic on a non-GBR bearer of a UE to some extent, a concept of a UE-AMBR is introduced in LTE. The UE-AMBR is an upper limit set for a sum of all non-GBR rates of a UE, and the parameter is determined by a mobility management entity (Mobility Management Entity, MME for short). The MME determines, according to UE subscription information stored on a home subscriber server and a current network load condition, UE-AMBRs including an uplink AMBR and a downlink AMBR. The MME notifies the base station of the UE-AMBRs, and the base station controls uplink and downlink transmission rates of the UE. FIG. 1 is a flowchart of a transmission rate control method according to an embodiment of the present invention, and as shown in FIG. 1, a method 100 includes:
S110: A first base station receives a user equipment aggregation maximum bit rate UE-AMBR sent by a mobility management entity MME.
S120: The first base station determines, according to the UE-AMBR, a first UE-AMBR used for the first base station and a second UE-AMBR used for a second base station, where the first base station controls, based on the first UE-AMBR, a transmission rate between the first base station and a user equipment UE.
S130: The first base station sends the second UE-AMBR to the second base station, so that the second base station controls, based on the second UE-AMBR, a transmission rate between the second base station and the UE.

As described in the foregoing, the first base station serving a P-Cell and the second base station serving an S-Cell exist in carrier aggregation.

According to the embodiment of the present invention, a sum of the first UE-AMBR and the second UE-AMBR is less than or equal to the UE-AMBR determined by the MME.

In addition, in step S110, after the first base station receives the UE-AMBR configured by the MME, the first base station judges whether the UE is a UE for inter-base station configuration; and if a determination result is that the UE is a UE for inter-base station configuration, the UE-AMBR is determined.

The UE-AMBR may be determined in a manner according to a specific condition, for example, 60% of the UE-AMBR may be allocated to the first base station for use, and 40% of the UE-AMBR may be allocated to the second base station for use, and in this case, the sum of the first UE-AMBR and the second UE-AMBR is equal to the UE-AMBR. According to a specific application scenario, 60% of the UE-AMBR may also be allocated to the first base station for use, and 20% of the UE-AMBR may be allocated to the second base station for use, and in this case, the sum of the first UE-AMBR and the second UE-AMBR is less than the UE-AMBR.

According to the embodiment of the present invention, as shown in FIG. 2, after step S130, the method 100 includes:
S140: The first base station notifies the MME of the first UE-AMBR and/or the second UE-AMBR, so that the MME acquires an allocation condition of the UE-AMBR between the first base station and the second base station.

It should be noted that the number of the second base stations may be one or more in the embodiment of the present invention.

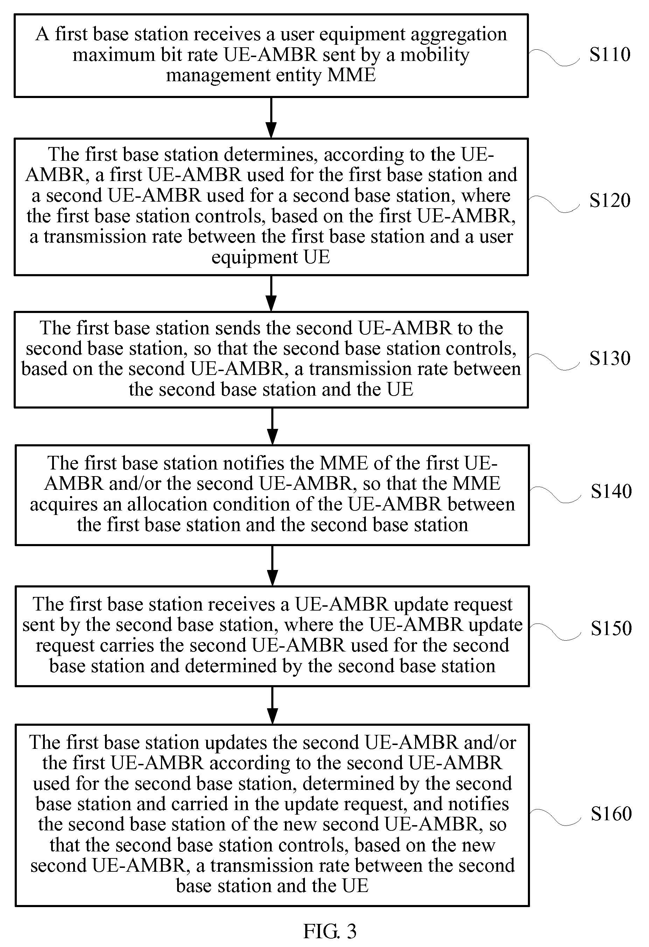

After the UE-AMBR is allocated to the first base station and the second base station, adjustment or update may be performed according to a specific condition, and according to the embodiment of the present invention, the update may be triggered by the first base station and/or the second base station. For example, as shown in FIG. 3, the method 100 may further include:
S150: The first base station receives a UE-AMBR update request sent by the second base station, where the UE-AMBR update request carries the second UE-AMBR used for the second base station and determined by the second base station.

The method 100 may further include:
S160: The first base station updates the second UE-AMBR and/or the first UE-AMBR according to the second UE-AMBR used for the second base station, determined by the second base station and carried in the update request, and notifies the second base station of the new second UE-AMBR, so that the second base station controls, based on the new second UE-AMBR, a transmission rate between the second base station and the UE.

In the foregoing embodiment, in the case of keeping the UE-AMBR unchanged, the first base station may reallocate the UE-AMBR between the first base station and the second base station. For example, due to buffer underrun, the second base station requests the first base station to decrease the UE-AMBR of the second base station. For example, in a case that 60% of the UE-AMBR is allocated to the first base station for use and 40% of the UE-AMBR is allocated to the second base station for use, the second base station requests decreasing the second UE-AMBR, for example, decreasing to 20% of the UE-AMBR, so that the first base station may allocate 80% of the UE-AMBR to the first base station for use and allocate 20% of the UE-AMBR to the second base station for use. After the reallocation, the first base station may notify the MME of the new first UE-AMBR and the new second UE-AMBR.

According to the embodiment of the present invention, the second base station may also request the first base station to increase the UE-AMBR of the second base station, for example, increasing to 50% of the UE-AMBR, so that the first base station may allocate 50% of the UE-AMBR to the first base station for use and allocate 50% of the UE-AMBR to the second base station for use, and notify the MME of the relocation condition.

According to a specific use condition, the first base station may allocate 55% of the UE-AMBR to the first base station for use and allocate 45% of the UE-AMBR to the second base station for use, that is, the new second UE-AMBR may be less than or equal to the second UE-AMBR required by the second base station.

According to the embodiment of the present invention, the first base station may adjust the second UE-AMBR according to a requirement. For example, in a case that 60% of the UE-AMBR is allocated to the first base station for use and 40% of the UE-AMBR is allocated to the second base station for use, the first base station may adjust the first UE-AMBR to 80% of the UE-AMBR according to a requirement, and adjust the second UE-AMBR to 20% of the UE-AMBR and notify the second base station. In another example, in a case that 60% of the UE-AMBR is allocated to the first base station for use and 20% of the UE-AMBR is allocated to the second base station for use, that is, when the sum of the first UE-AMBR and the second UE-AMBR is less than the UE-AMBR and the sum of the first UE-AMBR determined by the first base station and the current second UE-AMBR is less than the UE-AMBR, the first base station may adjust the first UE-AMBR to 80% of the UE-AMBR according to a requirement and keep the second UE-AMBR unchanged.

According to the embodiment of the present invention, for inter-base station carrier aggregation, a first base station or an MME determines a first UE-AMBR used for the first base station and a second UE-AMBR used for a second base station. When multiple base stations separately control UE-AMBRs for a UE, the UE-AMBRs of the first base station and the second base station are effectively coordinated, so that the first base station controls, based on the first UE-AMBR, a transmission rate between the first base station and the user equipment UE and the second base station controls, based on the second UE-AMBR, a transmission rate between the second base station and the UE, thereby improving utilization of the UE-AMBR and ensuring stability of the transmission rate between each base station and the UE.

According to a further embodiment of the present invention, when multiple base stations jointly control the UE-AMBR, it is ensured that a sum of all non-GBR rates of the UE is not greater than the UE-AMBR, thereby lowering the risk of network operation and enabling an operator to perform effective planning and control on communication traffic.

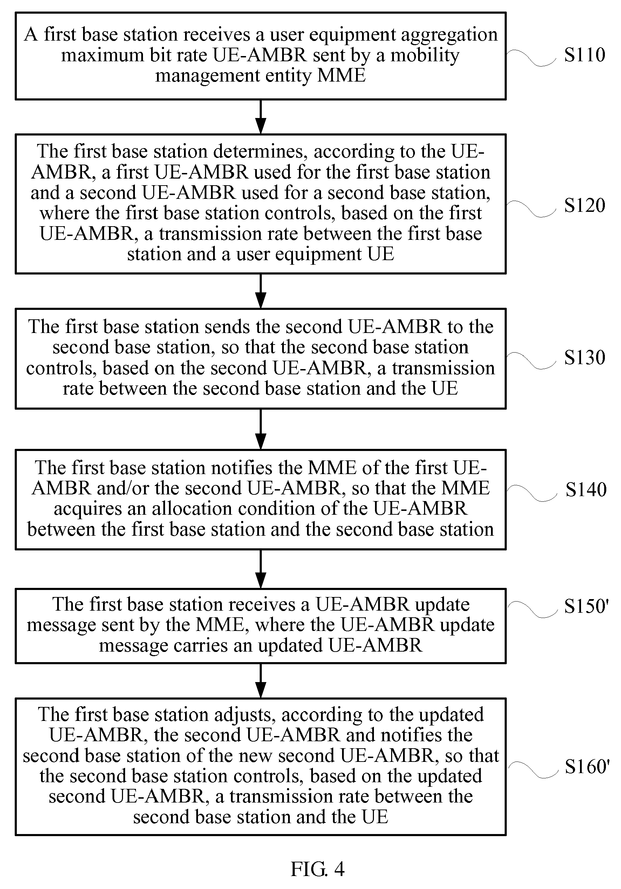

According to another embodiment of the present invention, in a case that the first base station notifies the MME of the first UE-AMBR and the second UE-AMBR, the MME may determine to update the UE-AMBR of the first base station or the second base station. This case is shown in FIG. 4; and the method 100 includes:
S150': The first base station receives a UE-AMBR update message sent by the MME, where the UE-AMBR update message carries an updated UE-AMBR.
S160': The first base station adjusts, according to the updated UE-AMBR, the second UE-AMBR and notifies the second base station of the updated second UE-AMBR, so that the second base station controls, based on the updated second UE-AMBR, a transmission rate between the second base station and the UE.

In this case, the MME may determine to update the UE-AMBR but keep an allocation proportion of the UE-AMBR unchanged between the first base station and the second base station. The first base station may further adjust the first UE-AMBR according to the updated UE-AMBR.

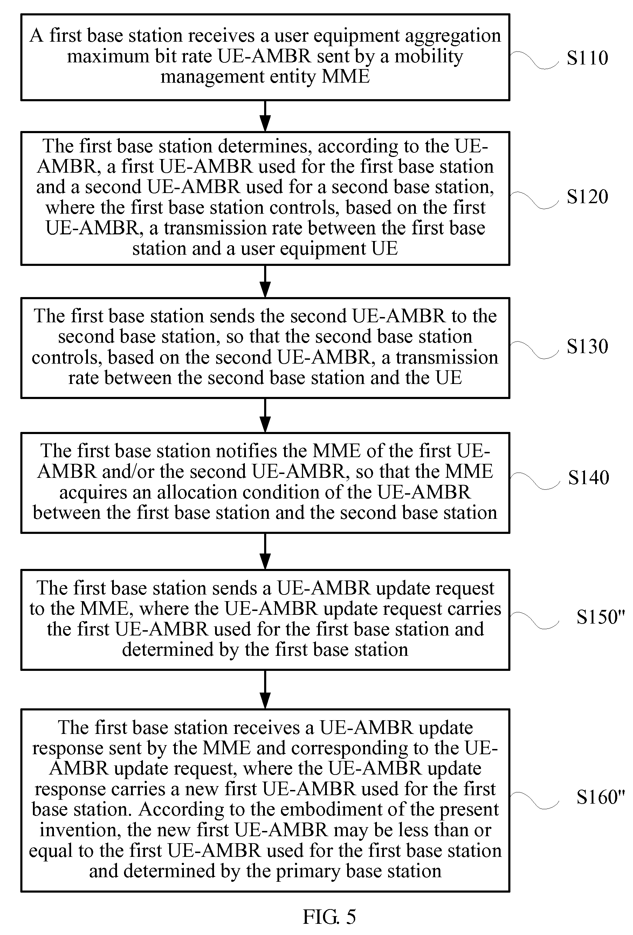

According to another embodiment of the present invention, in a case that the first base station notifies the MME of the first UE-AMBR and the second UE-AMBR, the first base station or the second base station may also separately request the MME to update the UE-AMBR of the first base station or the second base station. The first base station is used as an example for description; as shown in FIG. 5, the method 100 may further include:
S150": The first base station sends a UE-AMBR update request to the MME, where the UE-AMBR update request carries the first UE-AMBR used for the first base station and determined by the first base station.
S160": The first base station receives a UE-AMBR update response sent by the MME and corresponding to the UE-AMBR update request, where the UE-AMBR update response carries an updated first UE-AMBR. According to the embodiment of the present invention, the updated first UE-AMBR may be less than or equal to the first UE-AMBR used for the first base station and determined by the primary base station.

In the foregoing case, the MME may determine to update the UE-AMBR into a new UE-AMBR, and correspondingly update the first UE-AMBR into the first UE-AMBR used for the first base station and determined by the first base station; or in the case of keeping an initial UE-AMBR unchanged, the MME may also change an allocation proportion of the UE-AMBR between the first base station and the second base station to meet the first UE-AMBR used for the first base station and determined by the first base station.

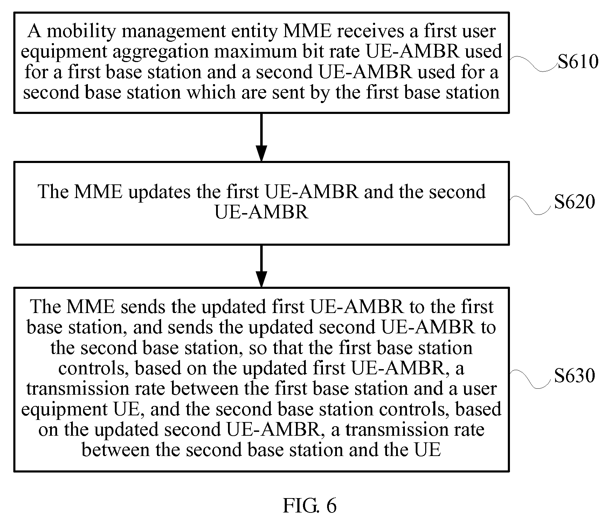

From a perspective of the MME, as shown in FIG. 6, a transmission rate control method 600 in the embodiment of the present invention includes:
S610: A mobility management entity MME receives a first user equipment aggregation maximum bit rate UE-AMBR used for a first base station and a second UE-AMBR used for a second base station which are sent by the first base station.
S620: The MME updates the first UE-AMBR and the second UE-AMBR.
S630: The MME sends the updated first UE-AMBR to the first base station, and sends the updated second UE-AMBR to the second base station, so that the first base station controls, based on the updated first UE-AMBR, a transmission rate between the first base station and a user equipment UE, and the second base station controls, based on the updated second UE-AMBR, a transmission rate between the second base station and the UE.

The first base station serves a primary cell, and the second base station serves a secondary cell.

In a case that the UE-AMBR is updated, the MME may update the UE-AMBR and at the same time update the first UE-AMBR and/or the second UE-AMBR. Definitely, the MME may also update the first UE-AMBR and/or the second UE-AMBR on the premise of keeping the UE-AMBR unchanged.

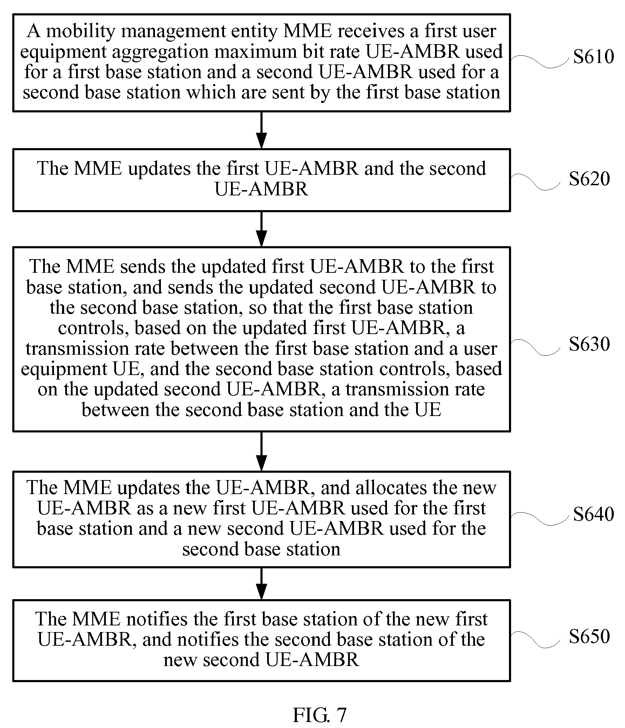

FIG. 7 shows a manner of updating the UE-AMBR; and the method 600 may further include:
S640: The MME updates the UE-AMBR, and allocates the new UE-AMBR as a new first UE-AMBR used for the first base station and a new second UE-AMBR used for the second base station.
S650: The MME notifies the first base station of the new first UE-AMBR, and notifies the second base station of the new second UE-AMBR.

In this case, the MME may update the UE-AMBR and at the same time update the first UE-AMBR. Definitely, the MME may also update the first UE-AMBR on the premise of keeping the UE-AMBR unchanged.

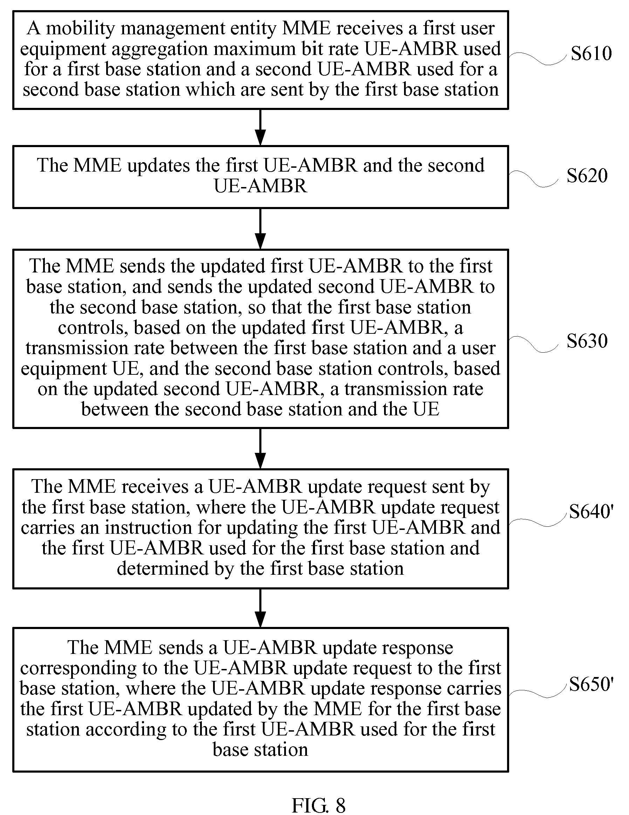

FIG. 8 shows a manner of updating the first UE-AMBR at a request of the first base station; and the method 600 may further include:
S640': The MME receives a UE-AMBR update request sent by the first base station, where the UE-AMBR update request carries an instruction for updating the first UE-AMBR and the first UE-AMBR used for the first base station and determined by the first base station.
S650': The MME sends a UE-AMBR update response corresponding to the UE-AMBR update request to the first base station, where the UE-AMBR update response carries the first UE-AMBR updated by the MME for the first base station according to the first UE-AMBR used for the first base station.

In this case, the MME may update the UE-AMBR and at the same time update the first UE-AMBR. Definitely, the MME may also update the first UE-AMBR on the premise of keeping the UE-AMBR unchanged.

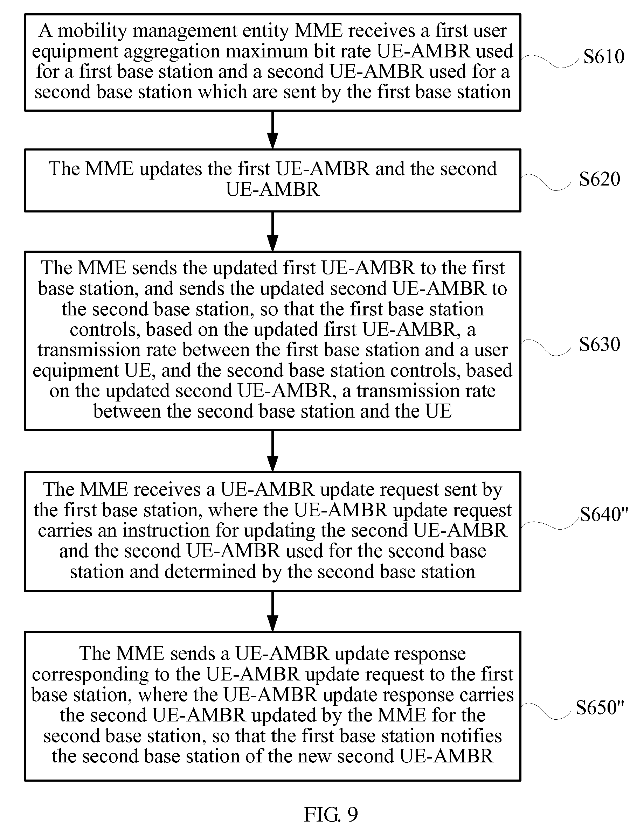

FIG. 9 shows another manner of updating the second UE-AMBR at a request of the first base station; and the method 600 may further include:
S640": The MME receives a UE-AMBR update request sent by the first base station, where the UE-AMBR update request carries an instruction for updating the second UE-AMBR and the second UE-AMBR used for the second base station and determined by the second base station.
S650": The MME sends a UE-AMBR update response corresponding to the UE-AMBR update request to the first base station, where the UE-AMBR update response carries the second UE-AMBR updated by the MME for the second base station, so that the first base station notifies the second base station of the new second UE-AMBR.

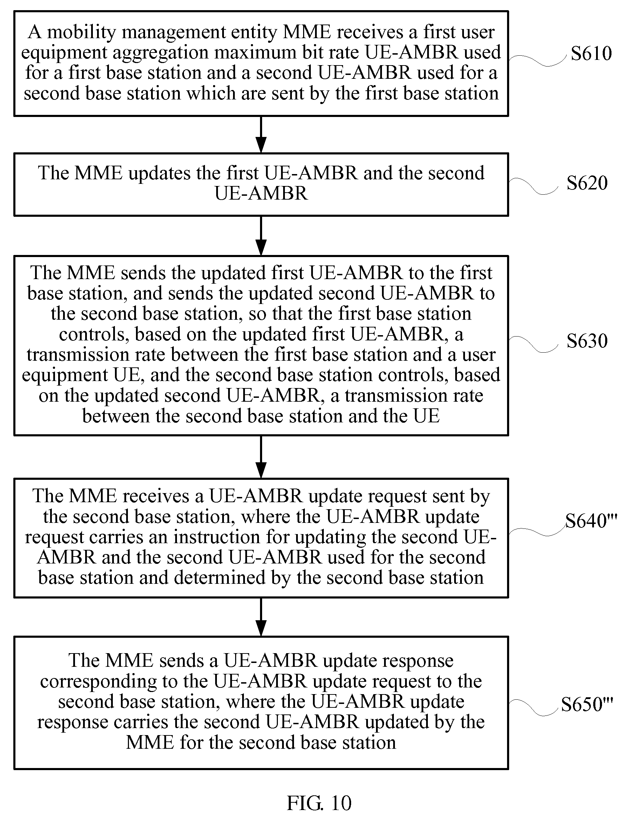

FIG. 10 shows another manner of updating the second UE-AMBR at a request of the second base station; and the method 600 may further include:
S640'": The MME receives a UE-AMBR update request sent by the second base station, where the UE-AMBR update request carries an instruction for updating the second UE-AMBR and the second UE-AMBR used for the second base station and determined by the second base station.
S650'": The MME sends a UE-AMBR update response corresponding to the UE-AMBR update request to the second base station, where the UE-AMBR update response carries the second UE-AMBR updated by the MME for the second base station.

It should be noted that in a case that the first UE-AMBR and/or the second UE-AMBR are updated, a sum of the updated new first UE-AMBR and new second UE-AMBR may be less than or equal to the UE-AMBR, that is, when the UE-AMBR is unchanged, the sum of the updated new first UE-AMBR and new second UE-AMBR is less than or equal to the initial UE-AMBR, and in a case that the UE-AMBR is updated, the sum of the updated new first UE-AMBR and new second UE-AMBR is less than or equal to the new UE-AMBR.

According to the embodiment of the present invention, for inter-base station carrier aggregation, a first base station or an MME determines a first UE-AMBR used for the first base station and a second UE-AMBR used for a second base station. When multiple base stations separately control UE-AMBRs for a UE, the UE-AMBRs of the first base station and the second base station are effectively coordinated, so that the first base station controls, based on the first UE-AMBR, a transmission rate between the first base station and the user equipment UE and the second base station controls, based on the second UE-AMBR, a transmission rate between the second base station and the UE, thereby improving utilization of the UE-AMBR and ensuring stability of the transmission rate between each base station and the UE.

According to a further embodiment of the present invention, when multiple base stations jointly control the UE-AMBR, it is ensured that a sum of all non-GBR rates of the UE is not greater than the UE-AMBR, thereby lowering the risk of network operation and enabling an operator to perform effective planning and control on communication traffic.

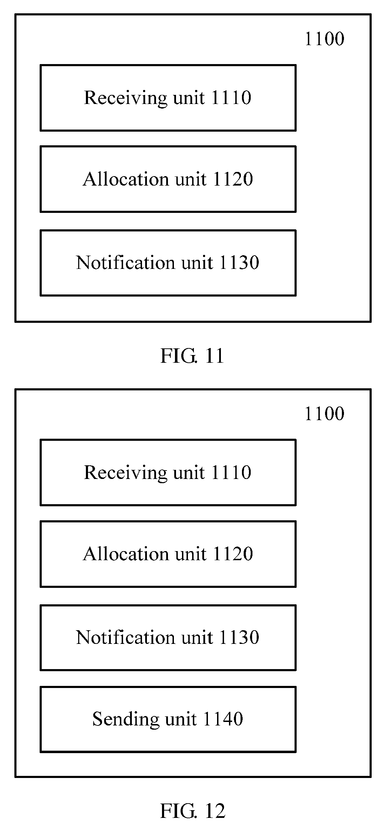

According to an embodiment of the present invention, a base station configured to implement the method embodiment of the present invention is further designed, where the base station may be used as the first base station in the method embodiment of the present invention. As shown in FIG. 11, a base station 1100 configured to implement a transmission rate control method includes:
a receiving unit 1110, configured to receive a UE-AMBR sent by an MME;
an allocation unit 1120, configured to determine, according to the UE-AMBR, a first UE-AMBR used for the base station and a second UE-AMBR used for a second base station, where the base station controls, based on the first UE-AMBR, a transmission rate between the base station and a user equipment UE; and
a notification unit 1130, configured to send the second UE-AMBR determined by the allocation unit 1120 to the second base station, so that the second base station controls, based on the second UE-AMBR, a transmission rate between the second base station and the UE.

According to the embodiment of the present invention, as shown in the foregoing description, a sum of the first UE-AMBR and the second UE-AMBR is less than or equal to the UE-AMBR.

According to the embodiment of the present invention, the receiving unit 1110 is further configured to receive a UE-AMBR update message sent by the MME, where the UE-AMBR update message includes an updated UE-AMBR; and the allocation unit 1120 is further configured to adjust the first UE-AMBR and the second UE-AMBR according to the updated UE-AMBR.

According to the embodiment of the present invention, the notification unit 1130 is further configured to notify the MME of the first UE-AMBR and/or the second UE-AMBR.

According to the embodiment of the present invention, the allocation unit 1120 is further configured to update the second UE-AMBR, and the notification unit 1130 is further configured to send the updated second UE-AMBR to the second base station, so that the second base station controls, based on the updated second UE-AMBR, a transmission rate between the second base station and the UE.

According to the embodiment of the present invention, when the UE-AMBR is updated, the receiving unit 1110 is further configured to receive a UE-AMBR update request sent by the second base station, where the UE-AMBR update request includes the second UE-AMBR used for the second base station and determined by the second base station; and
the allocation unit 1120 is further configured to update the second UE-AMBR according to the second UE-AMBR used for the second base station; and the notification unit 1130 is further configured to send the updated second UE-AMBR to the second base station, so that the second base station controls, based on the updated second UE-AMBR, a transmission rate between the second base station and the UE.

According to the embodiment of the present invention, the base station 1100 serves a primary cell, and the second base station serves a secondary cell.

According to the embodiment of the present invention, the new second UE-AMBR is less than or equal to the second UE-AMBR used for the second base station and determined by the second base station.

According to the embodiment of the present invention, after the UE-AMBR is updated, the notification unit 1130 notifies the MME of the new first UE-AMBR and the new second UE-AMBR.

According to the embodiment of the present invention, when the base station 1100 updates the first UE-AMBR and/or the second UE-AMBR according to notification of the MME, the receiving unit 1110 is configured to receive a UE-AMBR update message sent by the MME, where the UE-AMBR update message carries a new first UE-AMBR determined by the MME for the base station and a new second UE-AMBR determined by the MME for the second base station; and
the notification unit 1130 notifies the second base station of the new second UE-AMBR according to the UE-AMBR update message.

According to the embodiment of the present invention, as shown in FIG. 12, the base station 1100 further includes a sending unit 1140; when the base station 1100 requests the MME to update the first UE-AMBR of the base station 1100, the sending unit 1140 is configured to send a UE-AMBR update request to the MME, where the UE-AMBR update request carries the first UE-AMBR used for the base station and determined by the base station 1100; and
the receiving unit 1110 is configured to receive a UE-AMBR update response sent by the MME and corresponding to the UE-AMBR update request, where the UE-AMBR update response carries a new first UE-AMBR used for the base station 1100.

The base station in the embodiment of the present invention may implement an execution action of the base station in the foregoing method embodiment, for example, the receiving unit 1110 may execute an action of S110 in the method embodiment, and the allocation unit 1120 may execute an action of S120 in the method embodiment. Therefore, in the embodiment of the present invention, for inter-base station carrier aggregation, a first UE-AMBR used for the base station and a second UE-AMBR used for a second base station may be determined. When multiple base stations separately control UE-AMBRs for a UE, the UE-AMBRs of the base station and the second base station are effectively coordinated, so that the base station controls, based on the first UE-AMBR, a transmission rate between the base station and the user equipment UE and the second base station controls, based on the second UE-AMBR, a transmission rate between the second base station and the UE, thereby improving utilization of the UE-AMBR and ensuring stability of the transmission rate between each base station and the UE.

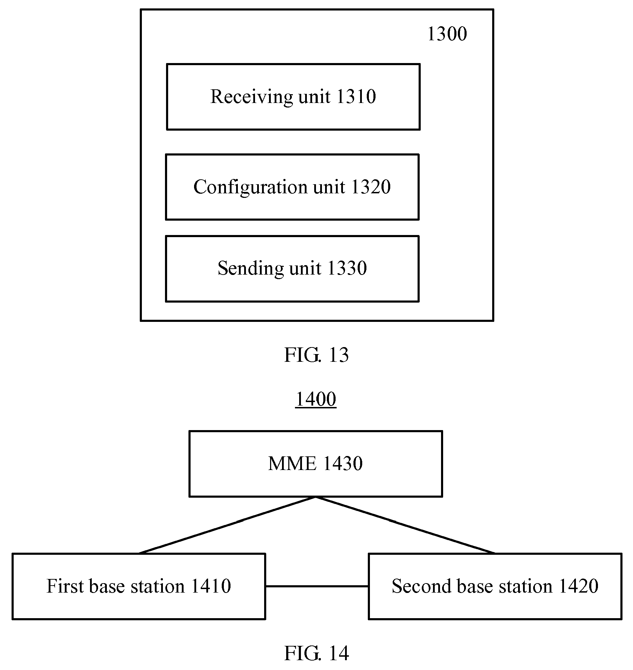

According to the embodiment of the present invention, a mobility management entity is further provided, where the mobility management entity may be used as an MME implementing the method embodiment of the present invention. As shown in FIG. 13, the mobility management entity 1300 includes:
a receiving unit 1310, configured to receive a first user equipment aggregation maximum bit rate UE-AMBR used for a first base station and a second UE-AMBR used for a second base station which are sent by the first base station;
a configuration unit 1320, configured to update the first UE-AMBR and the second UE-AMBR received by the receiving unit 1310; and
a sending unit 1330, configured to send the updated first UE-AMBR updated by the configuration unit 1320 to the first base station, and send the second UE-AMBR updated by the configuration unit 1320 to the second base station, so that the first base station controls, based on the updated first UE-AMBR, a transmission rate between the first base station and a user equipment UE, and the second base station controls, based on the updated second UE-AMBR, a transmission rate between the second base station and the UE,
where the first base station serves a primary cell, and the second base station serves a secondary cell.

According to the embodiment of the present invention, the sending unit 1330 is further configured to send the updated second UE-AMBR to the first base station, so that the first base station forwards the updated second UE-AMBR to the second base station.

According to the embodiment of the present invention, the receiving unit 1310 is further configured to receive a UE-AMBR update request sent by the first base station, where the UE-AMBR update request includes the first UE-AMBR used for the first base station and determined by the first base station; and
the configuration unit 1320 is further configured to update the first UE-AMBR according to the first UE-AMBR used for the first base station.

According to the embodiment of the present invention, the receiving unit 1310 is further configured to receive a UE-AMBR update request sent by the first base station or the second base station, where the UE-AMBR update request includes the second UE-AMBR used for the second base station and determined by the second base station; and
the configuration unit 1320 is further configured to update the second UE-AMBR according to the second UE-AMBR used for the second base station.

The mobility management entity in the embodiment of the present invention may implement an execution action of the mobility management entity in the foregoing method embodiment, for example, the receiving unit 1310 may execute an action of S610 in the method embodiment, and the configuration unit 1320 may execute an action of S620 in the method embodiment. Therefore, in the embodiment of the present invention, for inter-base station carrier aggregation, a first UE-AMBR used for the first base station and a second UE-AMBR used for a second base station may be determined. When multiple base stations separately control UE-AMBRs for a UE, the UE-AMBRs of the first base station and the second base station are effectively coordinated, so that the first base station controls, based on the first UE-AMBR, a transmission rate between the first base station and the user equipment UE and the second base station controls, based on the second UE-AMBR, a transmission rate between the second base station and the UE, thereby improving utilization of the UE-AMBR and ensuring stability of the transmission rate between each base station and the UE.

FIG. 14 shows a communications system according to an embodiment of the present invention. As shown in FIG. 14, the system 1400 includes a first base station 1410, a second base station 1420, and an MME 1430, where the first base station 1410 receives a user equipment aggregation maximum bit rate UE-AMBR sent by the MME 1430;
the first base station 1410 determines, according to the UE-AMBR, a first UE-AMBR used for the first base station 1410 and a second UE-AMBR used for a second base station 1420, where the first base station 1410 controls, based on the first UE-AMBR, a transmission rate between the first base station and a user equipment UE;
the first base station 1410 sends the second UE-AMBR to the second base station 1420; and
the second base station 1420 controls, based on the second UE-AMBR, a transmission rate between the second base station and the UE.

According to the embodiment of the present invention, a sum of the first UE-AMBR and the second UE-AMBR is less than or equal to the UE-AMBR.

According to the embodiment of the present invention,
the first base station 1410 is further configured to receive a UE-AMBR update message sent by the MME 1430, where the UE-AMBR update message includes an updated UE-AMBR; and
the first base station 1410 is further configured to adjust the first UE-AMBR and the second UE-AMBR according to the updated UE-AMBR.

According to the embodiment of the present invention, the first base station 1410 is further configured to update the second UE-AMBR, and send the updated second UE-AMBR to the second base station 1420; and
the second base station 1420 controls, based on the updated second UE-AMBR, a transmission rate between the second base station 1420 and the UE.

According to the embodiment of the present invention, the first base station 1410 is further configured to receive a UE-AMBR update request sent by the second base station 1420, where the UE-AMBR update request includes the second UE-AMBR used for the second base station 1420 and determined by the second base station 1420;
the first base station 1410 updates the second UE-AMBR according to the second UE-AMBR used for the second base station 1420, and send the updated second UE-AMBR to the second base station 1420; and
the second base station 1420 controls, based on the updated second UE-AMBR, a transmission rate between the second base station 1420 and the UE.

According to the embodiment of the present invention, the first base station 1410 serves a primary cell, and the second base station 1520 serves a secondary cell.

Therefore, the communications system in the embodiment of the present invention may determine, for inter-base station carrier aggregation, a first UE-AMBR used for the first base station and a second UE-AMBR used for a second base station. When multiple base stations separately control UE-AMBRs for a UE, the UE-AMBRs of the first base station and the second base station are effectively coordinated, so that the first base station controls, based on the first UE-AMBR, a transmission rate between the first base station and the user equipment UE and the second base station controls, based on the second UE-AMBR, a transmission rate between the second base station and the UE, thereby improving utilization of the UE-AMBR and ensuring stability of the transmission rate between each base station and the UE.

A person of ordinary skill in the art may be aware that units and algorithm steps of each example described in combination with the embodiments disclosed herein may be implemented by electronic hardware, or a combination of computer software and electronic hardware. Whether the functions are performed in a hardware or software manner depends on particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not repeatedly described herein.

In the several embodiments provided in the present application, it should be understood that the disclosed system, apparatus, and method may be implemented in other manners. For example, the described apparatus embodiments are merely exemplary. For example, dividing of the units is merely a type of logical function dividing, and there may be other dividing manners during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, each of the units may also exist alone physically, or two or more units may also be integrated into one unit.

When the functions are implemented in a form of a software functional unit and sold or used as an independent product, the functions may be stored in a computer-readable storage medium. Based on such understanding, the technical solutions of the present invention essentially, or the part contributing to the prior art, or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A transmission rate control method for inter-base station carrier aggregation, comprising:
receiving (S110), by a first base station, a user equipment aggregation maximum bit rate UE-AMBR sent by a mobility management entity MME;
determining (S120), by the first base station according to the UE-AMBR sent by the MME, a first UE-AMBR used for the first base station and a second UE-AMBR used for a second base station, wherein the first base station controls, based on the first UE-AMBR, a transmission rate between the first base station and a user equipment UE;
sending (S130), by the first base station, the second UE-AMBR to the second base station, so that the second base station controls, based on the second UE-AMBR, a transmission rate between the second base station and the UE;
receiving (S150), by the first base station, a UE-AMBR update request sent by the second base station, wherein the UE-AMBR update request comprises a second UE-AMBR used for the second base station and determined by the second base station;
updating (S160), by the first base station, the second UE-AMBR used for the second base station and determined by the first base station into a new second UE-AMBR according to the second UE-AMBR used for the second base station, determined by the second base station and carried in the update request; and
sending (S160) the new second UE-AMBR to the second base station, so that the second base station controls, based on the new second UE-AMBR, the transmission rate between the second base station and the UE.

2. The method according to claim 1, wherein
a sum of the first UE-AMBR and the second UE-AMBR is less than or equal to the UE-AMBR.

3. The method according to claim 1 or 2, wherein the determining, by the first base station according to the UE-AMBR, a first UE-AMBR used for the first base station and a second UE-AMBR used for a second base station comprises:
receiving, by the first base station, a UE-AMBR update message sent by the MME, wherein the UE-AMBR update message comprises an updated UE-AMBR; and
adjusting, by the first base station, the first UE-AMBR and the second UE-AMBR according to the updated UE-AMBR.

4. The method according to any one of claims 1 to 3, wherein
the first base station serves a primary cell, and the second base station serves a secondary cell.

5. A base station, comprising:
a receiving unit (1110), configured to receive a user equipment aggregation maximum bit rate UE-AMBR sent by a mobility management entity MME;
an allocation unit (1120), configured to determine, according to the UE-AMBR sent by the MME, a first UE-AMBR used for the base station and a second UE-AMBR used for a second base station, wherein the base station controls, based on the first UE-AMBR, a transmission rate between the base station and a user equipment UE;
a notification unit (1130), configured to send the second UE-AMBR determined by the allocation unit to the second base station, so that the second base station controls, based on the second UE-AMBR, a transmission rate between the second base station and the UE;
the receiving unit (1110) is further configured to receive a UE-AMBR update request sent by the second base station, wherein the UE-AMBR update request comprises a second UE-AMBR used for the second base station and determined by the second base station;
the allocation unit (1120) is further configured to update the second UE-AMBR used for the second base station and determined by the first base station into a new second UE-AMBR according to the second UE-AMBR used for the second base station, determined by the second base station and carried in the update request; and
the notification unit (1130) is further configured to send the new second UE-AMBR to the second base station, so that the second base station controls, based on the new second UE-AMBR, the transmission rate between the second base station and the UE.

6. The base station according to claim 5, wherein
a sum of the first UE-AMBR and the second UE-AMBR is less than or equal to the UE-AMBR.

7. The base station according to claim 5 or 6, wherein the receiving unit is further configured to receive a UE-AMBR update message sent by the MME, wherein the UE-AMBR update message comprises an updated UE-AMBR; and the allocation unit is further configured to adjust the first UE-AMBR and the second UE-AMBR according to the updated UE-AMBR.

8. The base station according to any one of claims 5 to 7, wherein
the base station serves a primary cell, and the second base station serves a secondary cell.

## Patentansprüche

1. Übertragungsratensteuerverfahren für Trägeraggregation zwischen Basisstationen, umfassend:
Empfangen (S110) durch eine erste Basisstation einer maximalen Sammelbitrate einer Benutzereinrichtung, UE-AMBR, die von einer Mobilitätsverwaltungsinstanz, MME, gesendet wird;
Bestimmen (S120) durch die erste Basisstation gemäß der von der MME gesendeten UE-AMBR einer ersten UE-AMBR, die für die erste Basisstation verwendet wird,
und einer zweiten UE-AMBR, die für eine zweite Basisstation verwendet wird,
wobei die erste Basisstation eine Übertragungsrate zwischen der ersten Basisstation und einer Benutzereinrichtung, UE, basierend auf der ersten UE-AMBR steuert;
Senden (S130) durch die erste Basisstation der zweiten UE-AMBR an die zweite Basisstation, so dass die zweite Basisstation eine Übertragungsrate zwischen der zweiten Basisstation und der UE basierend auf der zweiten UE-AMBR steuert;
Empfangen (S150) durch die erste Basisstation einer UE-AMBR-Aktualisierungsanforderung, die von der zweiten Basisstation gesendet wird, wobei die UE-AMBR-Aktualisierungsanforderung eine zweite UE-AMBR umfasst, die für die zweite Basisstation verwendet und von der zweiten Basisstation bestimmt wird;
Aktualisieren (S160) durch die erste Basisstation der zweiten UE-AMBR, die für die zweite Basisstation verwendet und von der ersten Basisstation bestimmt wird, auf eine neue zweite UE-AMBR gemäß der zweiten UE-AMBR, die für die zweite Basisstation verwendet, von der zweiten Basisstation bestimmt und in der Aktualisierungsanforderung übertragen wird; und
Senden (S160) der neuen zweiten UE-AMBR an die zweite Basisstation, so dass die zweite Basisstation die Übertragungsrate zwischen der zweiten Basisstation und der UE basierend auf der neuen zweiten UE-AMBR steuert.

2. Verfahren nach Anspruch 1, wobei
eine Summe der ersten UE-AMBR und der zweiten UE-AMBR kleiner als oder gleich wie die UE-AMBR ist.

3. Verfahren nach Anspruch 1 oder 2, wobei das Bestimmen durch die erste Basisstation einer ersten UE-AMBR, die für die erste Basisstation verwendet wird, und einer zweiten UE-AMBR, die für eine zweite Basisstation verwendet wird, gemäß der UE-AMBR umfasst:
Empfangen durch die erste Basisstation einer UE-AMBR-Aktualisierungsnachricht, die von der MME gesendet wird, wobei die UE-AMBR-Aktualisierungsnachricht eine aktualisierte UE-AMBR umfasst; und
Anpassen durch die erste Basisstation der ersten UE-AMBR und der zweiten UE-AMBR gemäß der aktualisierten UE-AMBR.

4. Verfahren nach einem der Ansprüche 1 bis 3, wobei
die erste Basisstation eine primäre Zelle versorgt, und die zweite Basisstation eine sekundäre Zelle versorgt.

5. Basisstation, umfassend:
eine Empfangseinheit (1110), die so konfiguriert ist, dass sie eine maximale Sammelbitrate einer Benutzereinrichtung, UE-AMBR, empfängt, die von einer Mobilitätsverwaltungsinstanz, MME, gesendet wird;
eine Zuweisungseinheit (1120), die so konfiguriert ist, dass sie gemäß der von der MME gesendeten UE-AMBR eine erste UE-AMBR, die für die Basisstation verwendet wird, und eine zweite UE-AMBR bestimmt, die für eine zweite Basisstation verwendet wird, wobei die Basisstation eine Übertragungsrate zwischen der Basisstation und einer Benutzereinrichtung, UE, basierend auf der ersten UE-AMBR steuert;
eine Benachrichtigungseinheit (1130), die so konfiguriert ist, dass sie die von der Zuweisungseinheit bestimmte zweite UE-AMBR an die zweite Basisstation sendet,
so dass die zweite Basisstation eine Übertragungsrate zwischen der zweiten Basisstation und der UE basierend auf der zweiten UE-AMBR steuert;
eine Empfangseinheit (1110), die so konfiguriert ist, dass sie eine UE-AMBR-Aktualisierungsanforderung empfängt, die von der zweiten Basisstation gesendet wird, wobei die UE-AMBR-Aktualisierungsanforderung eine zweite UE-AMBR umfasst, die für die zweite Basisstation verwendet und von der zweiten Basisstation bestimmt wird;
wobei die Zuweisungseinheit (1120) ferner so konfiguriert ist, dass sie die zweite UE-AMBR, die für die zweite Basisstation verwendet und von der ersten Basisstation bestimmt wird, gemäß der zweiten UE-AMBR, die für die zweite Basisstation verwendet, von der zweiten Basisstation bestimmt und in der Aktualisierungsanforderung übertragen wird, auf eine neue zweite UE-AMBR aktualisiert; und
die Benachrichtigungseinheit (1130) ferner so konfiguriert ist, dass sie die neue zweite UE-AMBR an die zweite Basisstation sendet, so dass die zweite Basisstation die Übertragungsrate zwischen der zweiten Basisstation und der UE basierend auf der neuen zweiten UE-AMBR steuert.

6. Basisstation nach Anspruch 5, wobei
eine Summe der ersten UE-AMBR und der zweiten UE-AMBR kleiner als oder gleich wie die UE-AMBR ist.

7. Basisstation nach Anspruch 5 oder 6, wobei die Empfangseinheit ferner so konfiguriert ist, dass sie eine UE-AMBR-Aktualisierungsnachricht empfängt, die von der MME gesendet wird, wobei die UE-AMBR-Aktualisierungsnachricht eine aktualisierte UE-AMBR umfasst; und die Zuweisungseinheit ferner so konfiguriert ist, dass sie die erste UE-AMBR und die zweite UE-AMBR gemäß der aktualisierten UE-AMBR anpasst.

8. Basisstation nach einem der Ansprüche 5 bis 7, wobei
die Basisstation eine primäre Zelle versorgt, und die zweite Basisstation eine sekundäre Zelle versorgt.

## Revendications

1. Procédé de commande de débit de transmission en vue d'une agrégation de porteuses entre stations de base, comprenant :
la réception (S110) par une première station de base d'un débit binaire maximal d'agrégation d'équipements utilisateur, UE-AMBR, envoyé par une entité de gestion de mobilité MME,
la détermination (S120) par la première station de base en fonction du débit UE-AMBR envoyé par l'entité MME d'un premier débit UE-AMBR utilisé pour la première station de base et d'un second débit UE-AMBR utilisé pour une seconde station de base, la première station de base commandant, sur la base du premier débit UE-AMBR, un débit de transmission entre la première station de base et un équipement utilisateur UE,
l'envoi (S130) par la première station de base du second débit UE-AMBR à la seconde station de base de telle sorte que la seconde station de base commande, sur la base du second débit UE-AMBR, un débit de transmission entre la seconde station de base et l'équipement utilisateur UE,
la réception (S150) par la première station de base d'une demande de mise à jour de débit UE-AMBR émise par la seconde station de base, la demande de mise à jour de débit UE-AMBR comprenant un second débit UE-AMBR utilisé pour la seconde station de base et déterminé par la seconde station de base,
la mise à jour (S 160) par la première station de base du second débit UE-AMBR utilisé pour la seconde station de base et déterminé par la première station de base en un nouveau second débit UE-AMBR en fonction du second débit UE-AMBR utilisé pour la seconde station de base, déterminé par la seconde station de base et transporté dans la demande de mise à jour, et
l'envoi (S 160) du nouveau second débit UE-AMBR à la seconde station de base de telle sorte que la seconde station de base commande, sur la base du nouveau second débit UE-AMBR, le débit de transmission entre la seconde station de base et
l'équipement utilisateur UE.

2. Procédé selon la revendication 1, dans lequel :
une somme du premier débit UE-AMBR et du second débit UE-AMBR est inférieure ou égale au débit UE-AMBR.

3. Procédé selon la revendication 1 ou la revendication 2, dans lequel la détermination, par la première station de base en fonction du débit UE-AMBR, d'un premier débit UE-AMBR utilisé pour la première station de base et d'un second débit UE-AMBR utilisé pour une seconde station de base comprend :
la réception, par la première station de base, d'un message de mise à jour de débit UE-AMBR envoyé par l'entité MME, le message de mise à jour de débit UE-AMBR comprenant un débit UE-AMBR mis à jour, et
l'ajustement, par la première station de base, du premier débit UE-AMBR et du second débit UE-AMBR en fonction du débit UE-AMBR mis à jour.

4. Procédé selon l'une quelconque des revendications 1 à 3, dans lequel :
la première station de base dessert une cellule principale et la seconde station de base dessert une cellule secondaire.

5. Station de base comprenant :
une unité de réception (1110) configurée pour recevoir un débit binaire maximal d'agrégation d'équipements utilisateur, UE-AMBR, envoyé par une entité de gestion de mobilité MME,
une unité d'allocation (1120) configurée pour déterminer, en fonction du débit UE-AMBR envoyé par l'entité MME, un premier débit UE-AMBR utilisé pour la station de base et un second débit UE-AMBR utilisé pour une seconde station de base, la station de base commandant, sur la base du premier débit UE-AMBR, un débit de transmission entre la station de base et un équipement utilisateur UE,
une unité de notification (1130) configurée pour envoyer le second débit UE-AMBR déterminé par l'unité d'allocation à la seconde station de base de telle sorte que la seconde station de base commande, sur la base du second débit UE-AMBR, un débit de transmission entre la seconde station de base et l'équipement utilisateur UE,
l'unité de réception (1110) est en outre configurée pour recevoir une demande de mise à jour de débit UE-AMBR émise par la seconde station de base, la demande de mise à jour de débit UE-AMBR comprenant un second débit UE-AMBR utilisé pour la seconde station de base et déterminé par la seconde station de base,
l'unité d'allocation (1120) est en outre configurée pour mettre à jour le second débit UE-AMBR utilisé pour la seconde station de base et déterminé par la première station de base en un nouveau second débit UE-AMBR en fonction du second débit UE-AMBR utilisé pour la seconde station de base, déterminé par la seconde station de base et transporté dans la demande de mise à jour, et
l'unité de notification (1130) est en outre configurée pour envoyer le nouveau second débit UE-AMBR à la seconde station de base de telle sorte que la seconde station de base commande, sur la base du nouveau second débit UE-AMBR, le débit de transmission entre la seconde station de base et l'équipement utilisateur UE.

6. Station de base selon la revendication 5, dans laquelle :
une somme du premier débit UE-AMBR et du second débit UE-AMBR est inférieure ou égale au débit UE-AMBR.

7. Station de base selon la revendication 5 ou la revendication 6, dans laquelle l'unité de réception est en outre configurée pour recevoir un message de mise à jour de débit UE-AMBR envoyé par l'entité MME, le message de mise à jour de débit UE-AMBR comprenant un débit UE-AMBR mis à jour ; et l'unité d'allocation est en outre configurée pour ajuster le premier débit UE-AMBR et le second débit UE-AMBR en fonction du débit UE-AMBR mis à jour.

8. Station de base selon l'une quelconque des revendications 5 à 7, la station de base desservant une cellule principale, et la seconde station de base desservant une cellule secondaire.
